# EUROPEAN PATENT SPECIFICATION

(11) **EP 0 494 549 B1**
(45) Date of publication and mention of the grant of the patent: **28.05.1997**
(21) Application number: 91312114.1
(22) Date of filing: 24.12.1991
(51) Int. Cl.: C07F 7/18, C07F 7/14, C08F 30/08

(54) **3-(Vinylbenzyloxy)propylsilane compounds and their preparation**
3-(Vinylbenzyloxy)propylsilan-Verbindungen und ihre Herstellung
Composés 3-(vinylbenzyloxy)propylsilanes et leur préparation

(30) Priority: 26.12.1990 JP 413948/90; 09.12.1991 JP 350090/91
(43) Date of publication of application: 15.07.1992
(73) Proprietor: Shin-Etsu Chemical Co., Ltd., Chiyoda-ku Tokyo 100 (JP)
(72) Inventor: Kubota, Tohru, Jouetsu-shi, Niigata-ken (JP); Ishihara, Toshinobu, Jouetsu-shi, Niigata-ken (JP); Endo, Mikio, Jouetsu-shi, Niigata-ken (JP); Uehara, Katsuhiro, Jouetsu-shi, Niigata-ken (JP)
(74) Representative: Dixon, Donald Cossar

(56) References cited:
- FR-A- 2 162 114
- CHEMICAL ABSTRACTS, vol. 70, 1969, Columbus, Ohio, US; abstract no. 48145Y, RUNGE, F. ET AL: 'POLYMERIZATION OF ALKENYLOXYSILANES WITH ORGANIC VINYL COMPOUNDS' page 25 ;
- CHEMICAL ABSTRACTS, vol. 72, 1970, Columbus, Ohio, US; abstract no. 32290X, TANIMOTO, S. ET AL: 'SYNTHESIS OF p-VINYLBENZYL ETHERS AND SULFIDES AND THEIR POLYMERISATION", p.6

## Description

The present invention relates to novel silane compounds and, more particularly, to compounds having a styrene skeleton which are highly homo- and copolymerizable, so that they are useful as a silane coupling agent or as polymerizing monomers.

Hitherto known alkoxysilane compounds of the type which contain a styrene skeleton include vinylbenzyltrimethoxysilane (Masanori Kokubo et al., Kohbunshi Ronbunshu, volume 36, page 201 (1981) and vinyl phenyltrimethoxysilane (Y. Kawakami et al., Polymer Journal, volume 17, page 1159 (1985)). In the syntheses thereof, however, it is necessary to use styrene-type Grignard reagents which are quite unstable and liable to polymerize (namely, vinylbenzylmagnesium halide in the former compound, and vinylphenylmagnesium halide in the latter compound).

Therefore, the syntheses of such compounds on an industrial scale are very difficult. In addition, since the syntheses of the foregoing compounds require a large quantity of solvent and a process of removing salts through filtration, they are at a disadvantage in entailing high cost of manufacturing.

As for another styrene skeleton-containing alkoxysilane, vinylphenetyltrimethoxysilane is known to be obtained by hydrosilylation of divinylbenzene with a hydrogensilane (G. Greert, Makromol. Chem., volume 53, page 19 (1962)). In general, the hydrosilylation method is said to be suitable for syntheses of functional group-containing alkoxysilanes as disclosed in FR-A-2 162 114 as regards low cost and good working efficiency, because it does not use any solvent and does not require any filtration process. In case of the above-cited compound, however, divinylbenzene used as a starting material is extremely unstable and apt to polymerize and, what is worse, it has a disadvantage in that there is a tendency for addition of two silane molecules upon hydrosilylation because of the presence of two vinyl groups almost equivalent in reactivity in the substrate, whereby the yield of the intended compound is lowered.

Therefore, objects of the present invention are to provide novel styrene skeleton-containing alkoxysilane compounds which are useful as a silane coupling agent or as polymerizing monomers, and to provide methods of producing such compounds.

We have now found that the hydrosilylation can be effected with ease by the use of 3-(vinylbenzyloxy)-1-propenes as a starting material, and can provide styrene skeleton-containing alkoxysilane compounds at a lower price, and that the compounds obtained thereby are novel compounds.

According to the present invention we provide 3-(vinylbenzyloxy)propylsilane compounds represented by the following general formula (1).

CH₂CH-Ø-CH₂OCH₂CH₂CH₂SiR¹(OR²)₃₋ₙ (1)

wherein Ø represents a benzene ring; R¹ and R² are each a hydrocarbon residue containing 1 to 4 carbon atoms and n is 0, 1 or 2.

Specific examples of R¹ and R² are a methyl ethyl, propyl, isopropyl and butyl group, of which methyl and ethyl are most preferred. In preferred compounds n is 0 and R² methyl or ethyl, or n is 1 and R¹ is methyl and R² methyl or ethyl.

The 3-(vinylbenzyloxy)propylsilane compounds of the present invention are styrene skeleton-containing alkoxysilane compounds which can be easily synthesized by a hydroxilylation reaction of 3-(vinylbenzyloxy)-1-propenes, which are easy to prepare and stable, with hydrogensilanes in the absence of a solvent without producing by-products including a salt.

The compounds of the present invention can thus be easily manufactured using as a starting compound a 3-(vinylbenzyloxy)-1-propene represented by the following formula (2):

CH₂CH-Ø-CH₂OCH₂CH=CH₂ (2)

The 3-(vinylbenzyloxy)-1-propenes represented by the above formula (2) can be synthesized with ease using a known method (G.F. Dalelio et al.,Journal of Polymer Science, volume 5, page 1245 (1867)). In these compounds, it is feasible to selectively hydrosilylate only the intended double bond in the allyloxy group since the double bond in the allyloxy group is more susceptible to hydrosilylation than the vinyl group in the styrene skeleton. More specifically, the compounds repesented by the general formula (2) include 3-(2-vinylbenzyloxy)-1-propene, 3-(3-vinylbenzyloxy)-1-propene and 3-(4-vinylbenzyloxy)-1-propene.

The 3-(vinylbenzyloxy)propylsilane compounds of the present invention can be synthesized by means of either of the two methods described below. The symbols R¹, R² and n used in the following formulae have the same meanings as those described for the foregoing general formula (1), respectively.

In a first synthesis method, the 3-(vinylbenzyloxy)propylsilane compounds of the present invention are obtained by allowing the 3-(vinylbenzyloxy)-1-propene compounds represented by the formula (2) to undergo a hydrosilylation reaction with hydrogensilanes represented by the general formula (3) in the presence of a platinum catalyst:

HSiR¹ₙ(OR²)₃₋ₙ (3)

Examples of a compound represented by the foregoing general formula (3) include alkoxysilane compounds such as trimethoxysilane, methyldiethoxysilane, ethyldiethoxysilane and dimethylbutoxysilane.

In a second synthesis method, 3-(vinylbenzyloxy)propylhalogenosilane compounds represented by the general formula, CH₂CH-Ø-CH₂OCH₂CH₂CH₂SiR¹ₙX₃₋ₙ, are firstly prepared by allowing a 3-(vinylbenzyloxy)-1-propene compound to undergo a hydrosilylation reaction with a hydrogen silane represented by the general formula (4) in the presence of a platinum catalyst:

HSiR¹ₙX₃₋ₙ (4)

wherein X represents a halogen atom.

As for the compounds represented by the foregoing formula (4), chlorosilane compounds such as trichlorosilane, methyldichlorosilane, ethyldichlorosilane and dimethylchlorosilane can be given as examples.

Then, the compound obtained is made to react with an alcohol represented by the general formula (5) to yield the 3-(vinylbenzyloxy)propylsilane compounds of the present invention.

R²OH (5)

As for the alcohols represented by the foregoing general formula (5), methanol, ethanol, propanol, isopropanol and butanol can be given as examples.

Specifically, the 3-(vinylbenzyloxy)propylsilane compounds of the present invention include 3-(4-vinylbenzyloxy)propyltrimethoxysilane, 3-(4-vinylbenzyloxy)propylmethyldimethoxysilane, 3-(4-vinylbenzyloxy)propylmethyldiethoxysilane, 3-(3-vinylbenzyloxy)propylethyldimethoxysilane and 3-(2-vinylbenzyloxy)propyldimethylbutoxysilane.

In both first and second synthesis methods, it is desirable that a reactor equippment with a stirrer, a thermometer, a reflux condenser and a dropping funnel should be used.

The amount of the platinum catalyst used is 5 to 500 ppm to the 3-(vinylbenzyloxy)-1-propene compound used, and the hydrogensilanes represented by the general formulae (3) and (4) are each dropped in an amount of 1-1.5 equivalents to the 3-(vinylbenzyloxy)-1-propene compound used. It is to be desired that these reactions should be carried out at 50-150°C.

It is to be specially noted that the reaction of a 3-(vinylbenzyloxy)propylhalogenosilane compound with an alcohol, which is part of the second synthesis method, can be effected without using any solvent, provided that 1.1-2 equivalents of an alcohol is used together with 1-1.5 equivalents (to the halogen atom) of urea. Additionally, the urea hydrochloride-alcohol phase can be removed by using a liquid separation procedure.

The 3-(vinylbenzyloxy)propylsilane compounds of the present invention are of industrially great usefulness as a silane coupling agent for bringing about an improvement in characteristics of composite materials, or as polymerizing monomers.

When a compound of the present invention is used as a silane coupling agent, it can suitably perform a function as a treatment agent or additive for inorganic materials such as glass fibers, clay, silica, quartz powder, mica or alumina, and for organic materials such as polyethylene, polypropylene, polystyrene, unsaturated polyester, natural rubber or synthetic rubber. Therein, they can widely exert their effect so as to improve the characteristics of composite materials, including enhancement of mechanical strength and adhesiveness, stabilization of electric characteristics, reforming of their resinous component and surface modification, or fully achieve their effect as a primer for heightening adhesion power of sealing agents.

On the other hand, when a compound of the present invention is used as a polymerizing monomer, it can undergo radical copolymerization with various kinds of radical polymerizing monomers, e.g., styrenes, acrylates, methacrylates, vinyl esters, ethylene, propylene, vinyl chloride, butadiene, isoprene, chloroprene or alpha-olefins in the presence of a polymerization initiator such as an organic peroxide, or an azo compound to produce polymers containing hydrolyzable alkoxysilyl groups in the side chains. These polymers have not only the property of being cross-linked efficiently with water under mild reaction conditions, but also great adhesiveness to various kinds of substrates because they contain alkoxy groups excellent in affinity for inorganic and metallic materials. In addition, their physical properties, including heat resistance, weather resistance, gas perviousness and shock resistance are highly satisfactory. Therefore, they can also be used in high functional plastic materials and functional film materials.

The present invention is illustrated in greater detail by reference to the following examples.

### EXAMPLE 1

After 691.0 g (5.0 mole) of a 50% 2-propenyl alcohol solution of sodium 2-propenoxide, 16.0 g of tetrabutylammonium bromide and 1.0 g of BHT were placed and mixed in a 3-liter glass flask equipped with a stirrer, a reflux condenser, a thermometer and a dropping funnel, 763.0 g (5.0 mole) of 4-vinylbenzyl chloride was added dropwise to the mixture from the dropping funnel as the temperature was kept at 35-40°C to make them undergo reaction. At the conclusion of the reaction, water was added to dissolve the produced salt. The resulting organic phase was separated, and then distilled to collect a 83-84°C/2 mmHg fraction. Thus, 795.4 g of 3-(4-vinylbenzyloxy)-1-propene was obtained in a 91.3% yield.

Subsequently, a 174.2 g (1.0 mole) portion of the thus obtained 3-(4-vinylbenzyloxy)-1-propene, 0.2 g of a 4% isopropyl alcohol solution of H₂ PtCl₆ and 0.5 g of BHT were placed in a 500-ml glass flask equipped with a stirrer, a reflux condenser, a thermometer and a dropping funnel. Thereto, 122.2 g (1.0 mole) of trimethoxysilane was added dropwise from the dropping funnel over a 2-hour period as the reaction mixture was kept at 70-80°C. Then, the resulting solution was ripened for 30 minutes at 80°C. The thus obtained solution was distilled to yield 265.8 g of the intended compound having a boiling point of 143-147°C/2 mmHg. The yield thereof was 88.0%.

The results of mass spectrum (MS), nuclear magnetic resonance spectrum (NMR) and infrared absorption spectrum measurements of this compound are shown below.

### Nuclear Magnetic Resonance Spectrum (NMR)

a: 3.43 ppm (S), b: 0.45-0.73 ppm (M), c: 1.30-1.88 ppm (M), d: 3.31 ppm (T), e: 4.34 ppm (S), f: 7.05-7.35 ppm (M), g: 6.56 ppm (M), h: 5.09 ppm (M), i: 5.55 ppm (M).

Herein, S and M in parentheses symbolize Singlet and Multiplet, respectively.

This result is in good accordance with the theoretical spectrum of the compound having the following structural formula;

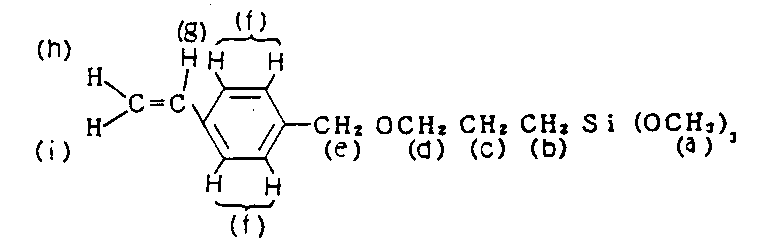

### Mass Spectrum (MS) : m/z (relative intensity of spectral line, assignment)

296 (8, M⁺), 264 (52, M-CH₃ OH), 147 (15), 121 (100, Si(OCH₃)₃), 117 (71), 91 (49).

This result is in good accordance with the theorectical spectrum of the above-illustrated compound.

### Infrared Absorption Spectrum (IR): (cm⁻¹)

2949, 2830, 1630, 1515, 1460, 1410, 1360, 1200, 1090, 990, 910.

This result is also in good accordance with the predictable spectrum of the foregoing compound.

Thus, the obtained substance is confirmed to be the compound represented by the following formula:

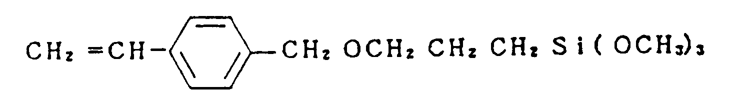

### EXAMPLE 2

In the same manner as in Example 1, except that 134.3 g (1.0 mole) of methyldiethoxysilane was used in the place of 122.2 g (1.0 mole) of trimethoxysilane, 256.4 g of a compound having a boiling point of 148-151°C/2 mmHg was obtained in a 83.1 % yield.

The results of mass spectrum (MS), nuclear magnetic resonance spectrum (NMR) and infrared absorption spectrum measurements of this compound are shown below.

### Nuclear Magnetic Resonance Spectrum (NMR)

a: 1.09 ppm (T), b: 3.59 ppm (Q), c: -0.03 ppm (S), d: 0.38-0.63 ppm (M), e: 1.30-1.78 ppm (M), f: 3.25 ppm (T), g: 4.29 ppm (S), h: 6.97-7.25 ppm (M), i: 6.52 ppm (M), j: 5.02 ppm (M), k: 5.50 ppm (M).

Herein, S, M, T and Q in parentheses symbolize Singlet, Multiplet, Triplet, and Quartet, respectively.

This result is in good accordance with the theoretical spectrum of the compound having the following structural formula;

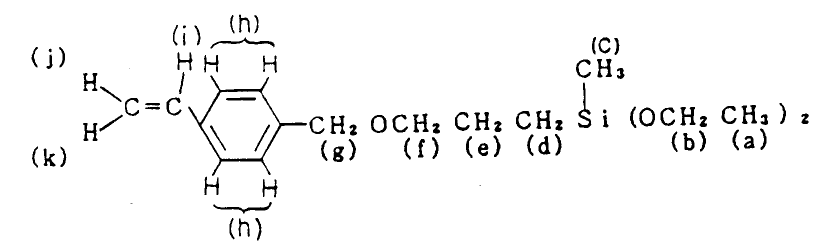

### Mass Spectrum (MS): m/z (relative intensity of spectral line, assignment)

308 (1, M⁺), 262 (79, M-CH₃CH₂OH), 145 (10), 133 (63, SiMe(OCH₂CH₃)₂), 117 (100), 105 (15), 89 (14).

This result is in good accordance with the theoretical spectrum of the above-illustrated compound.

### Infrared Absorption Spectrum (IR): (cm⁻¹)

2970, 2940, 2870, 1630, 1520, 1450, 1400, 1360, 1260, 1170, 1110, 1080, 995, 950.

This result is also in good accordance with the predictable spectrum of the foregoing compound.

Thus, the obtained substance is confirmed to be the compound represented by the following formula:

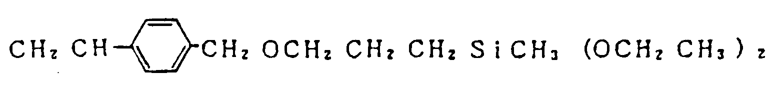

### EXAMPLE 3

87.1 g (0.5 mole) of 3-(4-vinylbenzyloxy)-1-propene, 0.1 g of a 4 % isopropyl alcohol solution of H₂PtCl₆ and 0.5 g of BHT were placed in a 500-ml glass flask equipped with a stirrer, a reflux condenser, a thermometer and a dropping funnel. Thereto, 57.5 g (0.5 mole) of methyldichlorosilane was added dropwise from the dropping funnel over a 2-hour period as the reaction mixture was kept at 70-80 °C. Then, the resulting solution was ripened for 30 minutes at 80°C . To the resulting solution, 66.1 g (1.1 moles) of urea was added, and 48.1 g (1.5 moles) of methanol was further added dropwise under room temperature. Thereupon, the urea hydrochloride-methanol phase was separated to form the lower layer. The lower layer was removed, while the upper layer was distilled to give 121.0 g of a compound having a boiling point of 147-151°C/2 mmHg. This compound was identified as the compound prepared in Example 2 by the measurements of mass spectrum (MS), nuclear magnetic resonance spectrum (NMR) and infrared absorption spectrum thereof. The yield in this preparation process was 78.4 %.

## Claims

1. 3-(vinylbenzyloxy)propylsilane compounds represented by the general formula CH₂CH-Ø-CH₂OCH₂CH₂CH₂SiR¹ₙ(OR²)₃₋ₙ, wherein Ø represents benzylidene, R¹ and R² each represent a hydrocarbon residue containing 1 to 4 carbon atoms, and n represents 0 or the integer 1 or 2.

2. A compound as claimed in Claim 1, wherein n is 0 and R² is a methyl or ethyl group.

3. A compound as claimed in Claim 1, wherein n is 1, R¹ is a methyl group and R² is a methyl or ethyl group.

4. A method of synthesizing a 3-(vinylbenzyloxy)-propylsilane compound as claimed in Claim 1, 2 or 3, which comprises causing a 3-(vinylbenzyloxy)-1-propene compound represented by the general formula CH₂CH-Ø-CH₂OCH₂CHCH₂ and a hydrogen silane represented by the general formula HSiR¹ₙ(OR²)₃₋ₙ, to undergo a hydroxilylation reaction in the presence of a platinum catalyst; the symbols in the formulae being defined as in Claim 1

5. A method as claimed in Claim 4, wherein said hydrogensilanes include at least one alkoxysilane.

6. A method as claimed in Claim 5, wherein said alkoxysilane is at least one hydrogen silane selected from trimethoxy hydrogensilane, methyldiethoxy hydrogen silane, ethyldiethoxy hydrogen silane and dimethyl butoxy hydrogen silane.

7. A method of synthesizing a 3-(vinylbenzyloxy)-propylsilane compound as claimed in Claim 1, 2 or 3, which comprises preparing a 3-(vinylbenzyloxy)propylhalogenosilane compound represented by the general formula CH₂CH-Ø-CH₂OCH₂CH₂CH₂SiR¹ₙX₃₋ₙ wherein X represents a halogen atom and the other symbols are as defined in Claim 1, 2 or 3, by causing a 3-(vinylbenzyloxy)-1-propene compound as defined in Claim 4 to undergo a hydrosilylation reaction with a hydrogen silane represented by the general formula HSiR¹ₙX₃₋ₙ, in the presence of a platinum catalyst; and reacting the resultant 3-(vinylbenzyloxy)propylhalogenosilane with an alcohol represented by the general formula R²OH, wherein R² represents a hydrocarbon residue containing 1 to 4 carbon atoms.

8. A method as claimed in Claim 7, wherein said halogen atom represented by X is a chlorine atom.

9. A method as claimed in Claim 7 or 8, wherein said hydrogensilane includes at least one chlorosilane compound selected from trichlorosilane, methyldichlorosilane, ethyldichlororsilane and dimethylchlorosilane.

10. A method as claimed in Claim 7, 8 or 9, wherein said reaction of the 3-(vinylbenzyloxy)propylhalogenosilane compound with an alcohol is carried out by using 1 to 1.5 equivalents (to the halogen atom) of urea together with the alcohol and controlling the amount of the alcohols to 1.1 to 2 equivalents (to the halogen atom) so as to effect the reaction without using any other solvent.

11. A method as claimed in any of Claims 4 to 10, wherein said 3-(vinylbenzyloxy)-1-propene compound is selected from 3-(2-vinylbenzyloxy)-1-propene, 3-(3-vinylbenzyloxy)-1-propene and 3-(4-vinylbenzyloxy)-1-propene.

12. A method as claimed in any of Claims 4 to 11, wherein the amount of hydrogen silane used is 1 to 1.5 equivalents per equivalent of the 3-(vinylbenzyloxy)-1-propene compound.

13. A method as claimed in any of Claims 4 to 12, wherein the amount of platinum catalyst used is 5-500 ppm of the 3-(vinylbenzyloxy)-1-propene compound.

## Patentansprüche

1. 3-(Vinylbenzyloxy)Propylsilan-Verbindungen, dargestellt durch die allgemeine Formel CH₂CH-Ø-CH₂OCH₂CH₂CH₂SiR¹ₙ(OR²)₃₋ₙ, wobei Ø Benzyliden darstellt, R¹ und R² jeweils einen Kohlenwasserstoffrest mit 1 bis 4 Kohlenstoffatomen darstellen, und n 0 oder die Zahlen 1 oder 2 darstellt.

2. Verbindung nach Anspruch 1, worin n 0 und R² eine Methyl- oder Ethylgruppe ist.

3. Verbindung nach Anspruch 1, wobei n 1 ist und R¹ eine Methylgruppe und R² eine Methyl- oder Ethylgruppe ist.

4. Verfahren zur Herstellung einer 3-(Vinylbenzyloxy)Propylsilan-Verbindung nach Anspruch 1, 2 oder 3, bei dem eine Hydrosilylierungsreaktion einer 3-(Vinylbenzyloxy)-1-Propenverbindung, dargestellt von der allgemeinen Formel CH₂CH-Ø-CH₂OCH₂CHCH₂, und eines Silanwasserstoffs, dargestellt durch die allgemeine Formel HSiR¹ₙ (OR²)₃₋ₙ in Anwesenheit eines Platinkatalysators bewirkt wird; die Formelsymbole sind wie in Anspruch 1 definiert.

5. Verfahren nach Anspruch 4, wobei die Silanwasserstoffe wenigstens ein Alkoxysilan beinhalten.

6. Verfahren nach Anspruch 5, wobei das genannte Alkoxysilan wenigstens ein Silanwasserstoff ist, ausgewählt aus Trimethoxysilanwasserstoff, Methyldiethoxysilanwasserstoff, Ethyldiethoxysilanwasserstoff und Dimethylbutoxysilanwasserstoff.

7. Verfahren zum Herstellen einer 3-(Vinylbenzyloxy)Propylsilan-Verbindung nach Anspruch 1, 2 oder 3, umfassend die Herstellung einer 3-(Vinylbenzyloxy)Propylhalogensilan-Verbindung, dargestellt durch die allgemeine Formel CH₂CH-Ø-CH₂OCH₂CH₂CH₂SiR¹ₙX₃₋ₙ, worin X ein Halogenatom darstellt und die anderen Symbole wie in Anspruch 1, 2 oder 3 definiert sind, durch Bewirken einer Hydrosilylierungsreaktion einer 3-(Vinylbenzyloxy)-1-Propenverbindung, wie in Anspruch 4 definiert, mit einem Silanwasserstoff, dargestellt durch die allgemeine Formel HSiR¹ₙX₃₋ₙ, in Anwesenheit eines Platinkatalysators; und Reagieren des resultierenden 3-(Vinylbenzyloxy)Propylhalogensilans mit einem Alkohol, dargestellt durch die allgemeine Formel R²OH, worin R² einen Kohlenwasserstoffrest mit 1 bis 4 Kohlenstoffatomen darstellt.

8. Verfahren nach Anspruch 7, wobei das genannte Halogenatom, dargestellt durch X, ein Chloratom ist.

9. Verfahren nach Anspruch 7 oder 8, wobei der genannte Silanwasserstoff wenigstens eine Chlorsilanverbindung, ausgewählt aus Trichlorsilan, Methyldichlorsilan, Ethyldichlorsilan und Dimethylchlorsilan, enthält.

10. Verfahren nach Anspruch 7, 8 oder 9, wobei die genannte Reaktion der 3-(Vinylbenzyloxy)Propylhalogensilan-Verbindung mit einem Alkohol durch Verwenden von 1 bis 1,5 Äquivalenten (zu dem Halogenatom) an Harnstoff zusammen mit dem Alkohol und Kontrollieren der Menge des Alkohols zu 1,1 bis 2 Äquivalenten (zu dem Halogenatom) durchgeführt wird, um so die Reaktion ohne Verwendung irgendeines anderen Lösungsmittels zu erwirken.

11. Verfahren nach einem der Ansprüche 4 bis 10, wobei die genannte 3-(Vinylbenzyloxy)-1-Propen-Verbindung aus 3-(2-Vinylbenzyloxy)-1-Propen, 3-(3-Vinylbenzyloxy)-1-Propen und 3-(4-Vinylbenzyloxy)-1-Propen gewählt wird.

12. Verfahren nach einem der Ansprüche 4 bis 11, wobei die Menge an verwendetem Silanwasserstoff 1 bis 1,5 Äquivalente pro Äquivalent an 3-(Vinylbenzyloxy)-1-Propen-Verbindung beträgt.

13. Verfahren nach einem der Ansprüche 4 bis 12, wobei die Menge an verwendetem Platinkatalysator 5-500 ppm der 3-(Vinylbenzyloxy)-1-Propen-Verbindung beträgt.

## Revendications

1. Composés de 3-(vinylbenzyloxy)propylsilane représentés par la formule générale CH₂CH-Ø-CH₂OCH₂CH₂CH₂-SiR¹ₙ(OR²)₃₋ₙ, dans laquelle Ø représente le benzylidène, R¹ et R² représentent chacun un résidu hydrocarboné contenant de 1 à 4 atomes de carbone et n vaut 0 ou le nombre entier 1 ou 2.

2. Composé selon la revendication 1, dans lequel n vaut 0 et R² est un groupe méthyle ou éthyle.

3. Composé selon la revendication 1, dans lequel n vaut 1, R¹ est un groupe méthyle et R² est un groupe méthyle ou éthyle.

4. Procédé de synthèse d'un composé de 3-(vinylbenzyloxy)propylsilane selon la revendication 1, 2 ou 3, dans lequel on fait subir une réaction d'hydrosilylation à un composé de 3-(vinylbenzyloxy)-1-propène représenté par la formule générale CH₂CH-Ø-CH₂OCH₂CHCH₂ et à un hydrogénosilane représenté par la formule générale HSiR¹ₙ(OR²))₃₋ₙ, en présence d'un catalyseur de platine ; les symboles dans les formules étant définis comme dans la revendication 1.

5. Procédé selon la revendication 4, dans lequel lesdits hydrogénosilanes incluent au moins un alcoxy silane.

6. Procédé selon la revendication 5, dans lequel ledit alcoxysilane est au moins un hydrogénosilane choisi parmi le triméthoxyhydrogénosilane, le méthyldiéthoxyhydrogénosilane, l'éthyldiéthoxyhydrogénosilane et le diméthylbutoxyhydrogénosilane.

7. Procédé de synthèse d'un composé de 3-(vinybenzyloxy)-propylsilane selon la revendication 1, 2 ou 3, dans lequel on prépare un composé de 3-(vinylbenzyloxy)propylhalogénosilane représenté par la formule générale CH₂CH-Ø-CH₂OCH₂CH₂CH₂SiR¹ₙX₃₋ₙ, où X représente un atome d'halogène et les autres symboles sont tels que définis dans la revendication 1, 2 ou 3, en faisant subir une réaction d'hydrosylilation à un composé de 3-(vinylbenzyloxy)-1-propène tel que défini dans la revendication 4 avec un hydrogénosilane représenté par la formule générale HSiR¹ₙX₃₋ₙ, en présence d'un catalyseur de platine ; et en faisant réagir le 3-(vinylbenzyloxy)propylhalogénosilane résultant avec un alcool représenté par la formule générale R²OH, dans laquelle R² représente un résidu hydrocarboné contenant de 1 à 4 atomes de carbone.

8. Procédé selon la revendication 7 dans lequel ledit atome d'halogène représenté par X est un atome de chlore.

9. Procédé selon la revendication 7 ou 8, dans lequel ledit hydrogénosilane inclut au moins un composé de chlorosilane choisi parmi le trichlorosilane, le méthyldichlorosilane, l'éthyldichlorosilane et le diméthylchlorosilane.

10. Procédé selon la revendication 7, 8 ou 9, dans lequel ladite réaction du composé de 3-(vinylbenzyloxy)-propylhalogénosilane avec un alcool est conduite en utilisant à 1 à 1,5 équivalent (par rapport à l'atome d'halogène) d'urée avec l'alcool et en régulant la quantité des alcools à 1,1 à 2 équivalents (par rapport à l'atome d'halogène) de manière à effectuer la réaction sans utiliser aucun autre solvant.

11. Procédé selon l'une quelconque des revendications 4 à 10, dans lequel ledit composé de 3-(vinylbenzyloxy)-1-propène est choisi parmi le 3-(2-vinylbenzyloxy)-1-propène, le 3-(3-vinylbenzyloxy)-1-propène et le 3-(4-vinylbenzyloxy)-1-propène.

12. Procédé selon l'une quelconque des revendications 4 à 12, dans lequel la quantité d'hydrogénosilane utilisée est de 1 à 1,5 équivalent par équivalent du composé de 3-(vinylbenzyloxy)-1-propène.

13. Procédé selon l'une quelconque des revendications 4 à 12, dans lequel la quantité de catalyseur de platine utilisée est de 5-500 ppm du composé de 3-(vinylbenzyloxy)-1-propène.
